# EUROPEAN PATENT SPECIFICATION

(11) **EP 0 529 091 B1**
(45) Date of publication and mention of the grant of the patent: **30.11.1994**
(21) Application number: 92906160.4
(22) Date of filing: 26.02.1992
(51) Int. Cl.: G11B 33/02

(54) **DEVICE FOR MANIPULATING A SHUTTER**
Vorrichtung zur Betätigung eines Verschlusses
DISPOSITIF D'ACTIONNEMENT D'UN VOLET

(30) Priority: 27.02.1991 JP 9701/91 U; 10.12.1991 JP 349960/91
(43) Date of publication of application: 03.03.1993
(73) Proprietor: FUNAI ELECTRIC COMPANY LIMITED, Daito-shi, Osaka 574 (JP)
(72) Inventor: HAMAHATA, Hiroshi, Funai Electric Co., Ltd., Osaka 574 (JP)
(74) Representative: Durand, Yves Armand Louis
(86) International application number: JP9200209
(87) International publication number: WO9215991

(56) References cited:
- EP-A- 0 180 273
- EP-A- 0 307 917
- Soviet Invention Illustrated, El section, week 8725, August 5, 1987, Derwent Publications Ltd., London, T 03, SU, A, 1 267 474 (PONO)
- Soviet Invention Illustrated, El section, week 8633, September 24, 1986, Derwent Publications Ltd., London, T 03, SU, A, 1 203 587 (BELO)

## Description

### THE BACKGROUND OF THE INVENTION

The present invention relates to a device for manipulating a shutter adapted to a cassette recorder such as a video tape or disc recorder, a video tape or disc player for home or business use as well as a combination recorder with a television, and other visual or audio devices having a recorder or player.

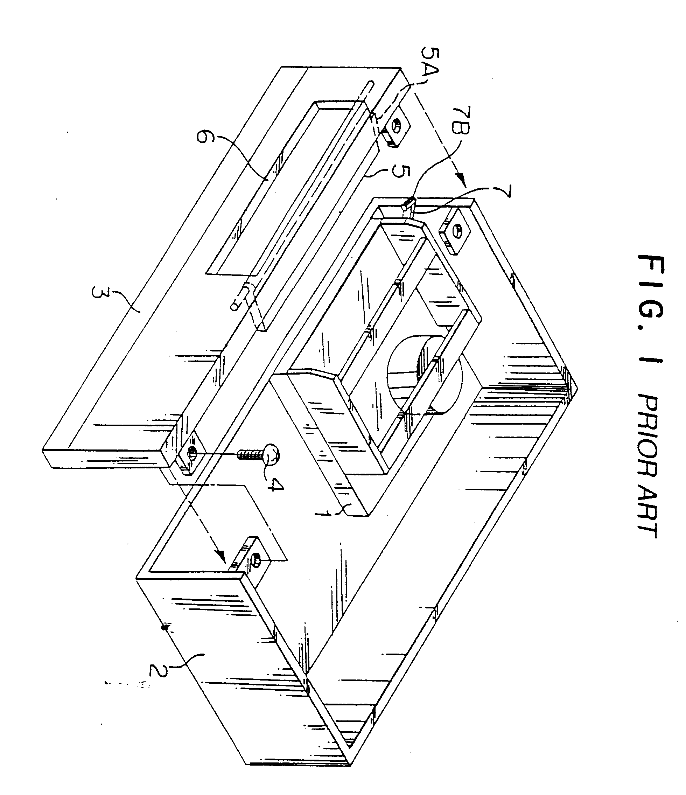

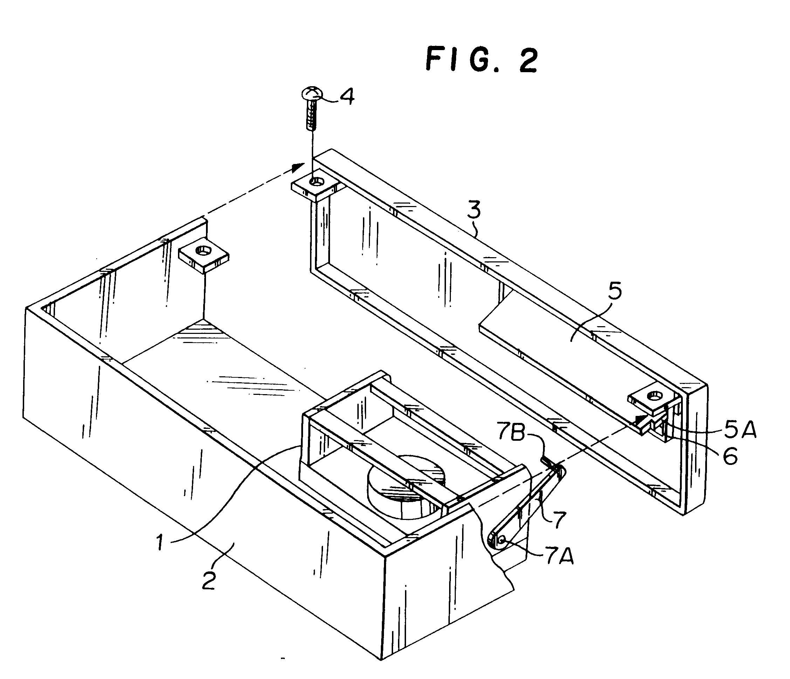

The prior recorder or player had generally included, as shown in Figs. 1 and 2, a tape or disc cassette deck 1 disposed in a chassis 2 with it possessing the front place thereof, a front panel 3 detachably secured to the front face of the chassis 2 by means of threaded screws 4, a shutter 5 disposed to an opening 6 which is formed to the front panel 3 in order to put in or take out a tape or disc cassette (not shown in the drawing) therethrough toward or from the cassette deck 1, the shutter 5 being pivoted to hinges (not shown in the drawing) mounted on the inner side of the front panel 3 so as to releaseably cover the opening 6, and means for manipulating the shutter 5 to the released condition under which the tape or disc cassette from the cassette deck 1 can be taken out through the opening 6.

The manipulating means had included a swinging lever 7 having a pivot shaft 7A rotatably supported to a bearing disposed to an assembly, which is mounted on the suitable inner place of the chassis 2 and includes the cassette deck 1, and having a guide pin 7B which is engageable to a stump 5A formed to the side of the shutter 5 with its positioning to the front side of the stump.

The manipulating means can be used such that the swinging lever 7 is automatically turned with its guide pin 7B pushing the stump 5A in the inner direction of the chassis so as to release the shutter 5 from the opening 6, when the tape or disc cassette is taken out through the opening.

However, under the assembling operation of the recorder, the manipulating means adapted to the shutter 5 had one undesirable problem that the front panel 3 should be secured to the front face of the chassis 2 by means of the threaded screws 4, after the shutter 5 is previously pushed to the inside of the chassis 2 by means of a pusher (not shown in the drawing) which is inserted through the opening 6 automatically or by the operator's hands so as to cause the guide pin 7B to be settled to the front side of the stump 5A after the front panel 3 is assembled to the chassis 2.

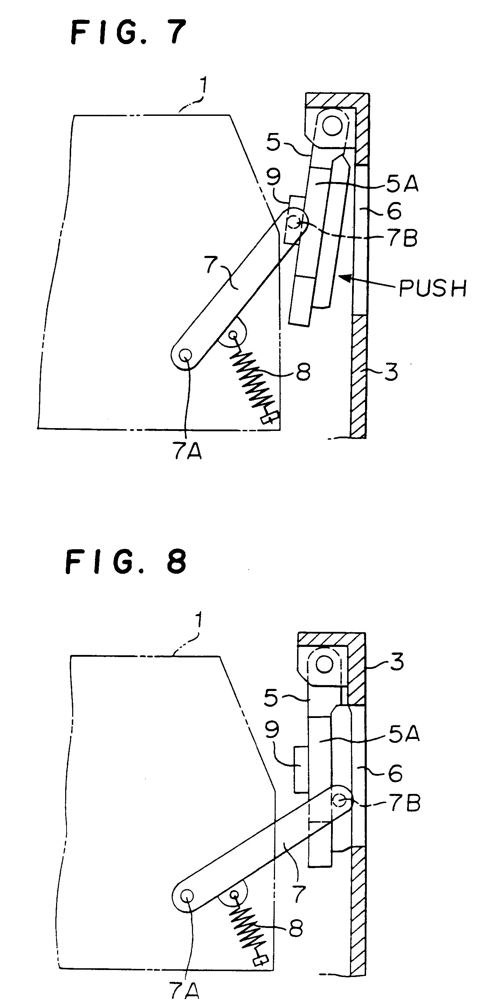

Furthermore, the swinging lever 7 should be biased by means of a spring member 8 as shown in Fig.7 and 8 so as to allow the shutter 5 to shut the opening 6 in its closed position. But the bias spring member may increase the costs and complicate assembling operations in the manufacture of the tape or disc recorder.

### OBJECTS OF THE INVENTION

An object of this invention provides a device for manipulating a shutter so improved as to cause a front panel to be assembled to a chassis with ease, without previously releasing the shutter by such means as a pusher.

A second object of this invention provides a device for manipulating a shutter, in which a swinging lever is provided in order to guide the shutter to direct to its open position, so improved as to remove a bias spring member for returning the swinging lever to allow the shutter to direct to its closed position, but so provided with a spring portion integrally formed to the swinging lever in a simple construction instead of the bias spring member.

### SUMMARY OF THE INVENTION

According to the present invention, there is provided a device for manipulating a shutter which includes a chassis containing a tape or disc cassette deck, a front panel detachably secured to the front face of the chassis, a shutter disposed to an opening which is formed to the front panel in order to put in or take out a tape or disc cassette therethrough toward or from the cassette deck, the shutter being hinged to the inner side of the front panel so as to releaseably cover the opening, and means for manipulating the shutter to a released condition under which the tape or disc cassette from the cassette deck can be taken out through the opening, characterized in that the manipulating means includes a swinging lever having its base end pivotally supported to the side of the chassis and its free end to which a guide pin is formed so as to be engaged to a stump formed to the side of the shutter, the stump having a deflector disposed to the rear side thereof, and the swinging lever being deflectable or flexible to cause the guide pin to be directed to the outside by the side of the stump by the guide of the deflector.

Further features and advantages of the present invention will be apparent from the following description taken with reference to the accompanying drawings.

### BRIEF DESCRIPTION OF THE DRAWINGS

FIG. 1 is a conventional front perspective view of a tape or disc recorder to which a device for manipulating a shutter generally adapted, the shutter being attached to a front panel so as to close an opening which is formed to the front panel as a cassette inlet and outlet;
FIG. 2 is a rear perspective view of the tape or disc recorder mentioned above;
FIG. 3 is a rear perspective view of a device for manipulating a shutter according to the embodiment of the present invention, which is partially illustrated;
FIGS. 4 to 6 are perspective views of the manipulating device in parts for explanation of the assembling operation according to the present invention;
FIG. 7 is a side view of the embodiment mentioned above in such condition that the front panel according to the embodiment of the present invention, is not assembled to the recorder chassis;
FIG. 8 is a side view of the embodiment mentioned above in such condition that the front panel according to the embodiment of the present invention, is already assembled to the chassis;
FIG. 9 is a perspective view of another embodiment of the present invention, which is partially illustrated;
FIG. 10 is a side view of a swinging lever specifically modified in the present invention; and
FIGS. 11, 12 and 13 are side views of the modification for explanation of the operation of the swinging lever.

### DETAILED DESCRIPTION

A device of this invention is adapted for manipulating a shutter attached to a front panel to cover an opening formed to the front panel as a cassette inlet and outlet through which a tape or disc cassette is put in a recorder or taken out.

In order to avoid a duplicative explanation, the same members as included in the shutter-manipulating device mentioned in FIGS. 1 and 2 are illustrated by the identical reference numbers in the other drawings indicating embodiments of the present invention.

The shutter-manipulating device according to the present invention is generally provided with a shutter 5 with a stump 5A integrally formed to the side thereof, a swinging lever 7 which has a pivot shaft 7B attached to its base end so as to be pivotally supported to the side of the chassis, and a guide pin 7B is formed to its free end so as to be engaged to the stump 5A, but is particularly provided with a deflector 9 disposed to the rear side of the stump 5A, and the swinging lever 7 being deflectable or flexible to cause the guide pin 7B to be directed to the outside by the side of the stump by the guide of the deflector 9.

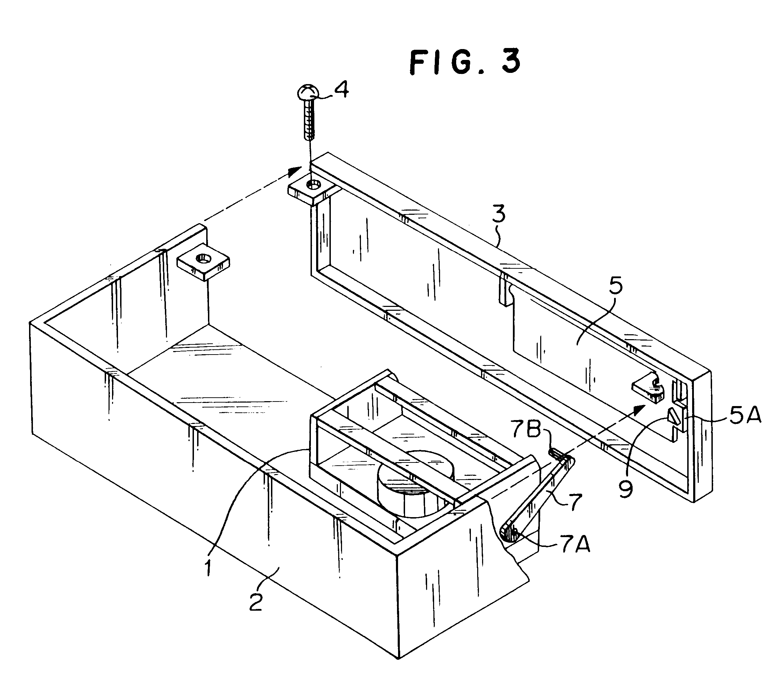

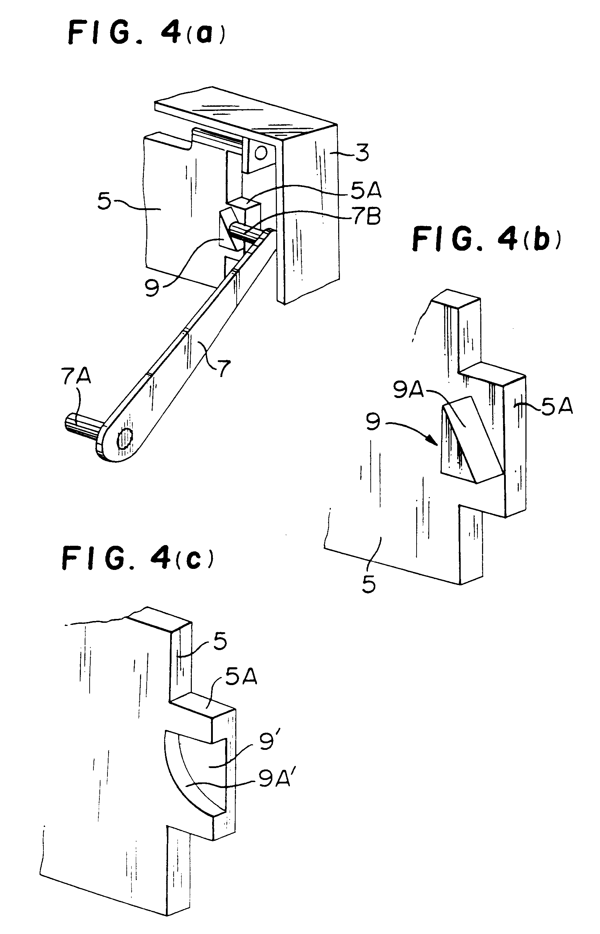

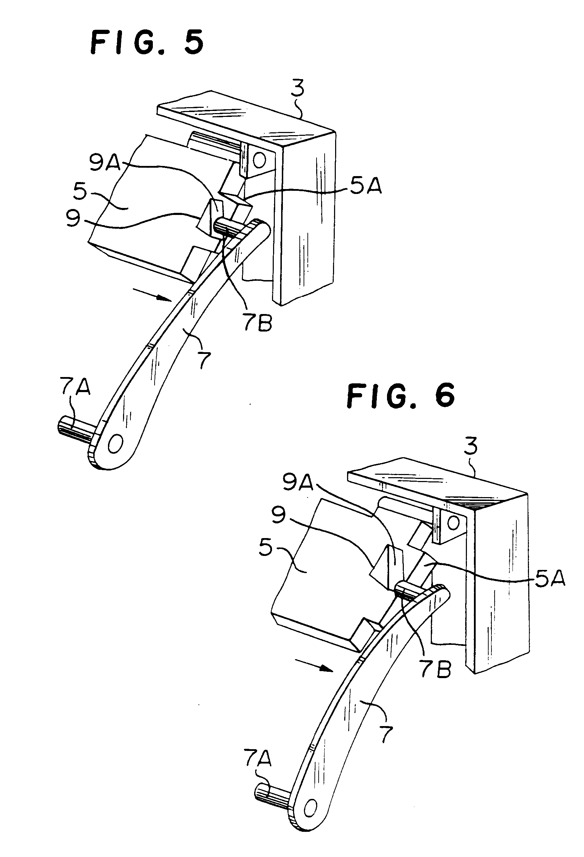

In the first embodiment illustrated in FIGS. 3 to 8, the deflector 9 comprises a triangle piece attached to the rear surface of the stump 5A with its guide surface 9A inclining in a vertical direction in a manner to extend to side by side of the shutter 7, and the swinging lever 7 is formed by such elastic material as synthetic regin with its width being sized to a thin measure directing to the side thereof.

Accordingly, in such way that the front panel 3 is being secured to the front face of the chassis 2 by means of suitable threaded screws in the assembling operation, the shutter 5 may be pushed to the inside of the chassis 2 by means of a pusher (not shown in the drawing) which is inserted through the opening 6 automatically or by the operator's hands so as to cause the swinging lever 7 to be flexibly deflected to the outside of the deck due to the elastic quality thereof in such manner that its guide pin 7B is slidably guided along the guide surface 9A so as to slide over the side by side of the stump 5A, thereby to be settled to the front side of the stump 5A.

In this embodiment, the deflector 9 may comprise a groove 9' formed to the rear surface of the stump 5A with its guide surface 9A' inclining in a vertical direction in a manner to extend to side by side of the shutter 5, and the swinging lever 7 is formed by such elastic material as synthetic regin with its width being sized to a thin measure directing to the side thereof.

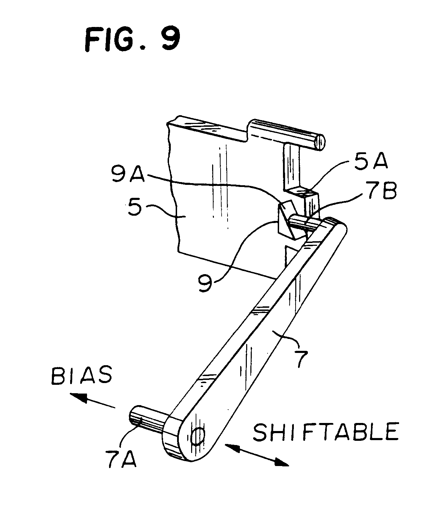

In the second embodiment illustrated in FIG. 9, the swinging lever 7 is formed into a hard shape, and the pivot shaft 7A can be shifted to its axis direction but is biased to the same direction by means of a bias spring member (not shown in the drawing) so that when the shutter 5 may be pushed to the inside of the chassis 2 in such assembling operation that the front panel 3 is attached to the chassis 2, the swinging lever 7 can be deflected against the bias spring force in a manner to guide the guide pin 7B along the guide surface 9A so as to slide over the side by side of the stump 5A, thereby to be settled to the front side of the stump 5A.

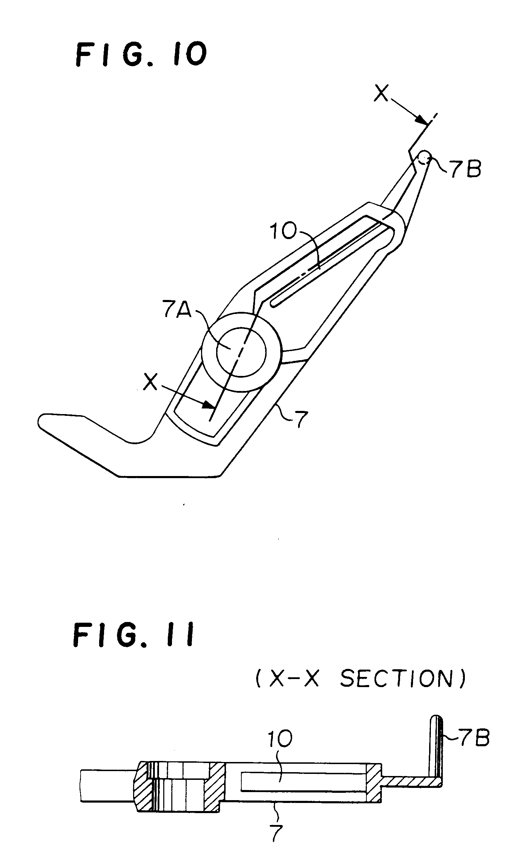

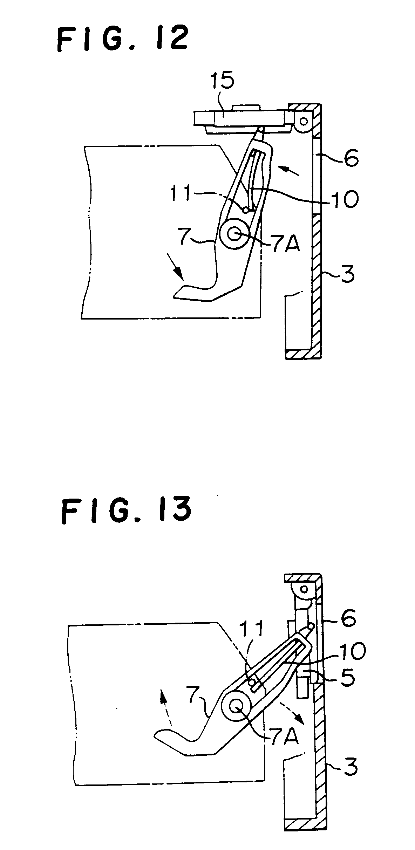

The modification of this invention includes a bias spring portion 10 integrally formed to the swinging lever 7 made of synthetic regin as shown in FIGS. 10 to 13, so that the bias spring portion is, at its free end, hooked up to a hook pin 11 attached to the inside wall of the chassis in a manner to be curved under the biased condition and to rebound under the released condition .

Accordingly, the bias spring portion is adapted to bias the swinging lever 7 thereby to allow the shutter to be shifted toward its closed position, instead of a bias spring member usually provided with the shutter manipulating means in the prior art in order to bias the swinging lever.

## Claims

1. A device for manipulating a shutter (5) adapted to cover an opening (6) used as a cassette inlet and outlet through which a tape or disc cassette is put in a recorder or taken out, which includes a chassis (2) containing a tape or disc cassette deck, a front panel (3) detachably secured to the front face of the chassis (2) a shutter (5) disposed to an opening (6) which is formed to the front panel (3) in order to put in or take out a tape or disc cassette therethrough toward or from the cassette deck, the shutter (5) being hinged to the inner side of the front panel so as to releaseably cover the opening (6,) and means for manipulating the shutter (5) to the released condition under which the tape or disc cassette from the cassette deck can be taken out through the opening (6) characterized in that the manipulating means includes a swinging lever (7) having a base end (7A) pivotally mounted to the side of the chassis (2) and a free end to which a guide pin (7B) projecting towards said shutter (5) is formed so as to be engaged to a stump (5A) formed to the side of the shutter (5) the stump (5A) having a deflector (9) disposed to the rear side thereof, and the guide pin (7B) being movable outwardly with respect to said shutter (5), allowing for said guide pin (7B) to be moved past the outer edge of said stump (5A) by means of a guide surface (9A) of said deflector (9).

2. A device for manipulating a shutter claimed in claim (1) in which the deflector (9) comprises a triangle piece attached to the rear surface of the stump (5A) with its oblique guide surface (9A) inclining in a direction away from said hinge towards said outer edge of said stump (5A) on said shutter (5) and the swinging lever (7) is formed by such elastic material as synthetic resin with its thickness being smaller than its width, thereby substantially representing a leaf spring.

3. A device for manipulating a shutter claimed in claim 1 in which the deflector (9) comprises a triangle piece attached to the rear surface of the stump 5A with its oblique guide surface (9A) inclining in a direction away from said hinge towards said outer edge of said stump (5A) on said shutter (5), and the swinging lever (7) is formed into a stiff shape, and a pivot shaft (7A) adapted to rotatably support the swinging lever (7) at the base end is capable of being shifted to its axis direction but is biased in the axis direction towards said shutter (5).

4. A device for manipulating a shutter claimed in claim 1 which the deflector (9) comprises a groove (9′) formed to the rear surface of the stump (5A) with its guide surface inclining in a direction away from said hinge towards said outer edge of said stump (5A) on said shutter (5), and the swinging lever (7) is formed by such elastic material as synthetic resin with its thickness being smaller than its width, thereby substantially representing a leaf spring.

5. A device for manipulating a shutter claimed in claim 1 in which the swinging lever (7) includes a bias spring portion (10) integrally formed to the swinging lever 7 made of synthetic resin, so that the bias spring portion (10) is, at its free end, hooked up to a hook pin (11) attached to the inside wall of the chassis (2) in a manner to be curved under the biased condition and to rebound under the released condition.

## Patentansprüche

1. Eine Vorrichtung zur Betätigung einer Klappe (5) zum Verschluss einer Öffnung (6), die als Einlass oder Auslass einer Kassette verwendet wird, durch die eine Band- oder Plattenkassette in ein Aufnahmegerät eingesetzt oder aus diesem herausgenommen wird, mit einem Gehäuse (2), das eine Band- oder Plattenkassettenplatte, einer Frontplatte (3), die abnehmbar mit der Frontseite des Gehäuses (2) verbunden ist, einer Klappe (5), die einer Öffnung (6) zugeordnet ist, die in der Frontplatte (3) ausgebildet ist, um eine Band- oder Plattenkassette durch sie hindurch einzulegen oder von der Kassettendecke herauszunehmen, wobei die Klappe (5) an der Innenseite der Frontplatte angelenkt ist, um die Öffnung (6) freigebbar zu verschliessen, und mit Mitteln zur Betätigung der Klappe (5) in den freigebenden Zustand, bei dem die Band- oder Plattenkassette von der Kassettendecke weg durch die Öffnung (6) hindurch entnommen werden kann, dadurch gekennzeichnet, dass die Betätigungsmittel einen Schwenkhebel (7) besitzen, der ein Basisende (7A), das schwenkbar an der Seite des Gehäuses (2) angebracht ist und ein freies Ende aufweist, an dem ein Führungsstift (7B), der zur Klappe (5) hin vorspringt, ausgebildet ist, um mit einem Ansatz (5A) an der Seite der Klappe (5) zusammenzuwirken, wobei der Ansatz (5A) auf seiner Rückseite einen Deflektor (9) trägt, und der Führungsstift (7B) bezogen auf die Klappe (5) nach aussen bewegbar ist, was es dem Führungsstift (7B) erlaubt, über die äussere Kante des genannten Ansatzes (5A) mittels einer Führungsfläche (9A) des Deflektors (9) bewegbar zu sein.

2. Vorrichtung zur Betätigung einer Klappe gemäss Anspruch 1, in der der Deflektor (9) ein dreieckförmiges Teil umfasst, das an der Rückseite des Ansatzes (5) angebracht ist und dessen schräge Führungsfläche (9A) in einer Richtung von dem Gelenk weg zu der äusseren Kante des Ansatzes (5A) der Klappe (5) geneigt ist, und dass der Schwenkhebel (7) aus elastischem Stoff wie synthetischem Harz gebildet ist, dessen Dicke geringer ist als seine Breite, sodass er im wesentlichen eine Blattfeder bildet.

3. Vorrichtung zur Betätigung einer Klappe nach Anspruch 1, in der der Deflektor (9) ein dreieckförmiges Teil besitzt, das an der Rückseite des Ansatzes (5A) angebracht ist und dessen schräge Führungsfläche (9A) in einer Richtung von dem genannten Gelenk weg zu der äusseren Kante des Ansatzes (5A) an der Klappe (5) geneigt ist, und dass der Schinkhebel (7) starr ausgebildet ist und ein Schwenkschaft (7A) der den Schwinghebel (7) drehbar am Basisende lagert, in der Lage ist, zu seiner Achse verschoben zu werden, jedoch in der Achsrichtung zu der Klappe (5) hin vorgespannt ist.

4. Vorrichtung zur Betätigung einer Klappe nach Anspruch 1, in der der Deflektor (9) eine Nut (5) besitzt, die in der Rückseite des Ansatzes (5A) ausgebildet ist und dessen Führungsfläche in einer Richtung von dem Gelenk weg zu der äusseren Kante des Ansatzes (5A) an der Klappe (5) geneigt ist, und der Schwinghebel (7) aus elastischem Stoff wie synthetischem Harz gebildet ist, wobei seine Dicke kleiner ist als seine Breite, sodass er im wesentlichen eine Blattfeder bildet.

5. Vorrichtung zur Betätigung einer Klappe nach Anspruch 1, in der dessen Hebel (7) einen Vorspannfederbereich (10) besitzt, der an dem Schwinkhebel (7) aus Kunststoff angeformt ist, sodass der Vorspannfederbereich (10) an seinem freien Ende an einem Hakenstift (11) angehakt ist, der an der Innenwand des Gehäuses (2) so befestigt ist, dass er in vorgespanntem Zustand gekrümmt ist und in entspanntem Zustand zurückspringt.

## Revendications

1. Dispositif d'actionnement d'un volet (5) apte à couvrir une ouverture (6) utilisée comme entrée et sortie de cassette à travers lesquelles une cassette à bande magnétique ou à disque est introduite dans un appareil enregistreur ou sorti de celui-ci, qui comprend un châssis (2) contenant une platine pour cassette à bande magnétique ou à disque, un panneau avant (3) fixé amoviblement à la face avant du châssis (2), un volet (5) monté sur une ouverture (6) qui est ménagée dans le panneau avant (3) pour introduire ou sortir une cassette à bande magnétique ou à disque à travers celle-ci sur ou depuis la platine de cassette, le volet (5) étant articulé au côté interne du panneau avant de façon à couvrir de manière relâchable l'ouverture (6), et un moyen pour manipuler le volet (5) pour l'amener dans l'état relâché dans lequel la cassette à bande magnétique ou à disque de la platine de cassette peut être sortie à travers l'ouverture (6), caractérisé en ce que le moyen de manipulation comprend un levier oscillant (7) dont une extrémité de base (7A) est montée de façon pivotante au côté du châssis (2) et une extrémité libre à laquelle une goupille de guidage (7B) faisant saillie vers ledit volet (5) est formée de façon à être mise en prise avec un bout (5A) formé sur le côté du volet (5), le bout (5A) possédant un déflecteur (9) disposé au côté arrière de celui-ci, et la goupille de guidage (7B) étant déplaçable vers l'extérieur relativement audit volet (5), en permettant ainsi à ladite goupille de guidage (7B) de se déplacer au-delà du bord externe dudit bout (5A) au moyen d'une surface de guidage (9A) dudit déflecteur (9).

2. Dispositif d'actionnement d'un volet selon la revendication 1, dans lequel le déflecteur (9) comprend une pièce triangulaire fixée à la surface arrière du bout (5A), sa surface de guidage oblique (9A) étant inclinée suivant une direction au loin de ladite articulation vers ledit bord externe dudit bout (5A) sur ledit volet (5), et le levier oscillant (7) est formé par un matériau élastique tel que la résine synthétique, son épaisseur étant plus petite que sa largeur, en représentant ainsi sensiblement un ressort à lames.

3. Dispositif d'actionnement d'un volet selon la revendication 1, dans lequel le déflecteur (9) comprend une pièce triangulaire fixée à la surface arrière du bout (5A), sa surface de guidage oblique (9A) étant inclinée suivant une direction au loin de ladite articulation vers ledit bord externe dudit bout (5A) sur ledit volet (5), et le levier oscillant (7) est réalisé suivant une forme rigide, et un arbre de pivot (7A) apte à supporter de façon rotative le levier oscillant (7) à l'extrémité de base peut être décalé vers la direction de son axe mais est sollicité dans la direction de l'axe vers ledit volet (5).

4. Dispositif d'actionnement d'un volet selon la revendication 1, dans lequel le déflecteur (9) comprend une rainure (9') ménagée dans la surface arrière du bout (5A), sa surface de guidage étant inclinée suivant une direction au loin de ladite articulation vers ledit bord externe dudit bout (5A) sur ledit volet (5), et le levier oscillant (7) est réalisé en un matériau élastique tel que la résine synthétique, son épaisseur étant plus petite que sa largeur, en représentant ainsi sensiblement un ressort à lames.

5. Dispositif d'actionnement d'un volet selon la revendication 1, dans lequel le levier oscillant (7) comprend une portion de ressort de sollicitation (10) venue de matière avec le levier oscillant (7) réalisé en résine synthétique de sorte que la portion de ressort de sollicitation (10), à son extrémité libre, est accrochée à une broche d'accrochage (11) attachée à la paroi interne du châssis (2) de manière à être courbée dans l'état sollicité et à rebondir dans l'état relâché.
